(19) Europäisches Patentamt / European Patent Office / Office européen des brevets

(11) **EP 4 232 623 B1**

(12) **EUROPEAN PATENT SPECIFICATION**

(45) Date of publication and mention
of the grant of the patent:
**17.12.2025 Bulletin 2025/51**

(21) Application number: **21802005.5**

(22) Date of filing: **22.10.2021**

(51) International Patent Classification (IPC):
*D01F 6/70* (2006.01)      *D01D 5/04* (2006.01)
*D01F 1/10* (2006.01)      *D01D 1/02* (2006.01)
*D01D 5/00* (2006.01)      *C08G 18/10* (2006.01)

(52) Cooperative Patent Classification (CPC):
(C-Sets available)
**D01F 6/70; C08G 18/10; C08G 18/3231;
C08G 18/3275; C08G 18/4854; C08G 18/758;
C08G 18/7671; C08L 75/08; D01D 1/02;
D01D 5/04; D01F 1/10**          (Cont.)

(86) International application number:
**PCT/IB2021/059765**

(87) International publication number:
**WO 2022/084940 (28.04.2022 Gazette 2022/17)**

(54) **POLYURETHANE ELASTIC FIBRE AND PRODUCTION METHOD THEREFOR**

ELASTISCHE POLYURETHANFASER UND HERSTELLUNGSVERFAHREN DAFÜR

FIBRE ÉLASTIQUE DE POLYURETHANE ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2020 JP 2020177919**

(43) Date of publication of application:
**30.08.2023 Bulletin 2023/35**

(73) Proprietor: **Toray Opelontex Co., Ltd
Osaka 530-8222 (JP)**

(72) Inventors:
• **TAKAYAMA, Hiroshi
Otsushi, Shiga 520-8558 (JP)**
• **HARA, Masashi
Otsushi, Shiga 520-8558 (JP)**

(74) Representative: **Carpmaels & Ransford LLP
One Southampton Row
London WC1B 5HA (GB)**

(56) References cited:
**WO-A2-2006/064085      WO-A2-2012/040076
CN-A- 110 373 742**

EP 4 232 623 B1

(52) Cooperative Patent Classification (CPC): (Cont.)

C-Sets
**C08G 18/10, C08G 18/282;**
**C08G 18/10, C08G 18/2865;**
**C08G 18/10, C08G 18/3228;**
**C08L 75/08, C08L 75/04**

**Description**

[Technical Field]

The present invention relates to a polyurethane elastic fiber and a production method therefor.

[Background Art]

Polyurethanes used in polyurethane elastic fibers are roughly divided into polyurethane urethane elastic fibers in which a diol is used primarily as the chain extender and polyurethane urea elastic fibers in which a diamine is used primarily as the chain extender.

Polyurethane elastic fibers composed of the former (polyurethane urethane) have high strength and elasticity, and Patent Document 1 discloses an example of a polyurethane elastic fiber whose fiber properties do not easily change over time. In the technique described in Patent Document 1, a specific copolymerized polyol that is not a general-purpose product has to be used as the raw material polyol in order to obtain the effect of the present invention.

Polyurethane elastic fibers composed of the latter (polyurethane urea) have high elasticity, but are not as strong as the former. Also, because their fiber properties change over time more than the former, problems with inventory control and processing condition management occur when these fibers are used, and it is difficult to obtain fabrics with stable fabric properties and fabric quality.

In other words, among polyurethane elastic fibers using general-purpose raw materials, there are no polyurethane elastic fibers composed of a polyurethane urethane or polyurethane urea whose fiber properties do not easily change over time.

Patent Document 2 discloses a polyurethane urea elastic fiber using a specific compound as a stopper in polyurethane urea production that suppresses the rise in the viscosity of the polyurethane urea solution.

Patent Document 3 discloses an example of a polyurethane elastic fiber containing a benzophenone UV absorber with at least one sulfonic acid group in the molecule. Some of the sulfonic acid groups in these UV absorbers may be a salt of an alkali metal such as sodium or potassium.

[Prior Art Documents]

[Patent Documents]

[Patent Document 1] JP H11-081045 A

[Patent Document 2] JP 2003-155624 A

[Patent Document 3] JP 2011-144491 A

Further relevant information can be found in documents WO 2006/064085, CN 110 373 742 and WO 2012/040076.

[Summary of the Invention]

[Problem to Be Solved by the Invention]

However, there are no polyurethane elastic fibers that use general-purpose raw materials that provide stretchability peculiar to polyurethane elastic fiber and fiber properties that do not easily change over time. Therefore, an object of the present invention is to provide a polyurethane elastic fiber with excellent textile properties and textile property stability over time, and to provide a method for producing such a polyurethane elastic fiber. Another object of the present invention is to provide a polyurethane elastic fiber that allows for easier inventory control and processing condition management of fibers when used, and that can be used to obtain fabrics with stable fabric properties and fabric quality, and to provide a method for producing such a polyurethane elastic fiber.

[Effect of the Invention]

Because the polyurethane elastic fibers of the present invention have higher recovery stress and lower permanent distortion in the range of actual use than conventional polyurethane elastic fibers, clothes using these elastic fibers have a good fit and feel, and are easy to take off. Because these elastic fibers also have stable mechanical properties over time, they are easy to process in the covering, knitting, and weaving process, whether used alone or in combination with other types of fibers for higher-order processing.

[Mode for Carrying Out the Invention]

The following is a detailed description of the present invention.

First, the polyurethane used in the present invention will be described.

In the following description, a polyurethane using as starting materials a polymer diol, a diisocyanate, and a chain extender, and not having a tertiary amine in the skeleton is referred to as "polyurethane A," and a polyurethane or polyurea using as starting materials a diol and/or a diamine and a diisocyanate, and having a tertiary amine nitrogen bonded only to a non-aromatic carbon in the skeleton, where the tertiary amine nitrogen is bonded ionically to a sulfonic acid compound to form a sulfonic acid amine, is referred to as "additive B." Note that "polyurethane" includes both polyurethane urethanes and polyurethane ureas.

There are no particular restrictions on the method used to obtain a polyurethane elastic fiber containing polyurethane A and additive B, and any method can be used as long as it is a method for producing a polyurethane elastic fiber by spinning a spinning stock solution containing polyurethane A and additive B. For example, a spinning stock solution a containing polyurethane A and additive solution d containing additive B can be prepared separately and then mixed together to obtain a spinning stock solution. In another method, the raw materials constituting additive B may be added to a solution containing polyurethane A, additive solution b and additive solution c may be mixed into spinning stock solution a containing polyurethane A to produce additive B and a spinning stock solution containing polyurethane A and additive B, and this spinning stock solution may be spun to obtain polyurethane fibers.

There are no particular restrictions on polyurethane A used in the present invention as long as a polymer diol, a diisocyanate, and a chain extender are used as starting materials and the skeleton does not have a tertiary amine. Here, having a polymer diol, a diisocyanate, and a chain extender as starting materials means the resulting polyurethane polymer has a structure derived from each component. In other words, in the present specification, the structure of polyurethane polymers obtained using a polymer diol, a diisocyanate, and a chain extender as starting materials is specified, but equivalent structures may be formed from different raw materials, and the raw materials themselves are not specified. Similarly, even when the same raw materials are used for synthesis, there are no particular restrictions on the synthesis method.

For example, polyurethane A may be a polyurethane urea polymer composed of a polymer diol, a diisocyanate, and a low molecular weight diamine, or a polyurethane urea polymer using a polymer diol, a diisocyanate, and a low molecular weight diol. It may also be a polyurethane urea using compound having a hydroxyl group and an amino group in the molecule as a chain extender. Examples of polyurethanes that do not have a tertiary amine in the skeleton include (1) when the polyurethane is a polyurethane urethane consisting of a polymer diol, a diisocyanate, and a low molecular weight diol, (2) when the low molecular weight amine in a polyurethane urea consisting of a polymer diol, a diisocyanate, and a low molecular weight diamine is only a primary amine and/or secondary amine, (3) when the amine in a compound having a hydroxyl group and an amino group in the molecule in a polyurethane urea using a compound having a hydroxyl group and an amino group in the molecule as a chain extender is only a primary amine and/or secondary amine, (4) when the amine in the polymer diamine in a polyurethane urea consisting of a polymer diamine, a diisocyanate, and a low molecular weight diol is only a primary amine and/or secondary amine, and (5) when the amine in the polymer diamine and the low molecular weight diamine in a polyurethane urea consisting of a polymer diol, a polymer diamine, a diisocyanate, and a low molecular weight diamine is only a primary amine and/or secondary amine. A polyfunctional glycol or isocyanate having trifunctionality or a higher functionality is preferably used in a range that does not impair the effects of the present invention.

Structural units typically used to compose a polyurethane of the present invention will now be described.

A polyether diol, a polyester diol, or a polycarbonate diol are preferred as the polymer diol used as a structural unit composing the polyurethane. A polyether diol is especially preferred from the standpoint of imparting flexibility and elasticity to the fiber.

Preferred examples of polyether diols include polyethylene oxide, polyethylene glycol, polyethylene glycol derivatives, polypropylene glycol, polytetramethylene ether glycol (PTMG), modified PTMG (3M-PTMG) that is a copolymer with tetrahydrofuran (THF) and 3-methyltetrahydrofuran, modified PTMG that is a copolymer with THF and 2,3-dimethyl THF, the polyol with side chains on both sides that is disclosed in JP 2615131 B2, and a random copolymer in which THF and ethylene oxide and/or propylene oxide are irregularly arranged. One or more of these polyether diols may be mixed together or copolymerized and then used.

From the standpoint of obtaining wear resistance and light resistance, preferred examples include butylene adipate, polycaprolactone diol, polyester diols such as the polyester polyol with a side chain disclosed in JP S61-026612 A, and the polycarbonate diol disclosed in JP H02-289516 A.

These polymer diols may be used alone, or two or more may be mixed together or copolymerized and then used.

From the standpoint of obtaining elasticity, strength, and heat resistance when made into a fiber, the number average molecular weight of the polymer diol is preferably 1,000 or more and 8,000 or less, and more preferably 1,800 or more and 6,000 or less. When a polyol with a molecular weight in this range is used, elastic fibers having excellent elasticity, strength, elastic resilience, and heat resistance can be readily obtained. The molecular weight is measured by GPC and converted in terms of polystyrene.

Aromatic diisocyanates are especially suitable for synthesizing polyurethanes with high heat resistance and strength. Examples include diphenylmethane diisocyanate (MDI), tolylene diisocyanate, 1,4-diisocyanate benzene, xylylene diisocyanate, and 2,6-naphthalene diisocyanate. Preferred examples of alicyclic diisocyanates include methylenebis (cyclohexyl isocyanate) (H12MDI), isophorone diisocyanate, methylcyclohexane 2,4-diisocyanate, methylcyclohexane 2,6-diisocyanate, cyclohexane 1,4-diisocyanate, hexahydroxylylene diisocyanate, hexahydrotolylene diisocyanate, and octahydro-1,5-naphthalenediisocyanate. Aliphatic diisocyanates are especially effective for suppressing the yellowing of polyurethane urea elastic fibers. These diisocyanates may be used alone or in combinations of two or more.

The chain extender used to synthesize polyurethane A from a polymer diol and a diisocyanate as described above is preferably at least one of a low molecular weight diamine and a low molecular weight diol. When a low molecular weight diamine is used, the amine in the compound has to be a compound containing only a primary amine and/or secondary amine. The low molecular weight diol may be a compound having a hydroxyl group and an amino group in the molecule such as ethanolamine, and the amine in the compound may be a primary amine and/or secondary amine.

Preferred examples of low molecular weight diamines include ethylenediamine, 1,2-propanediamine, 1,3-propanediamine, hexamethylenediamine, p-phenylenediamine, p-xylylenediamine, m-xylylenediamine, p,p'-methylenedianiline, 1,3-cyclohexyldiamine, hexahydromethphenylenediamine, 2-methylpentamethylenediamine, and bis (4-aminophenyl) phosphine oxide. These may be used alone or in combinations of two or more. Ethylenediamine is especially preferred. Ethylenediamine can be used to readily obtain a fiber having excellent elasticity, elasticity recovery, and heat resistance. A triamine compound that can form a crosslinked structure, such as diethylenetriamine, may be added to these chain extenders as long as the effects of the present invention are not lost.

Typical examples of low molecular weight diols include ethylene glycol, 1,3 propanediol, 1,4 butanediol, bishydroxyethoxybenzene, bishydroxyethylene terephthalate, and 1-methyl-1,2-ethanediol. One or more of these may be used. Preferred examples include ethylene glycol, 1,3 propanediol, and 1,4 butanediol. When these are used, their heat resistance increases as a diol-stretched polyurethane, and a stronger fiber can be obtained.

One or more end blockers is preferably mixed in with polyurethane A. Preferred examples of end blockers include monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, and diamylamine, monools such as ethanol, propanol, butanol, isopropanol, allyl alcohol, and cyclopentanol, and monoisocyanates such as phenyl isocyanate.

From the standpoint of obtaining fibers with high durability and strength, the average molecular weight of polyurethane A used in the present invention is preferably in the range of 30,000 or more and 150,000 or less. The molecular weight is measured by GPC and converted in terms of polystyrene.

In the present invention, when additive B, which is a polyurethane or polyurea using as starting materials a diol and/or a diamine and a diisocyanate, and having a tertiary amine nitrogen bonded only to a non-aromatic carbon in the skeleton, where the tertiary amine nitrogen is bonded ionically to a sulfonic acid compound to form a sulfonic acid amine, is included in a polyurethane elastic fiber containing polyurethane A with the basic composition described above, a polyurethane elastic fiber with excellent fiber properties and stability over time that does not impair the elasticity intrinsic to polyurethane elastic fibers can be obtained in addition to a production method therefor. Here, having a diol and/or a diamine and a diisocyanate as starting materials means the resulting polyurethane polymer has a structure derived from each component. In other words, in the present specification, the structure of polyurethane or polyurea polymer obtained using a diol and/or a diamine and a diisocyanate as starting materials is specified, but equivalent structures may be formed from different raw materials, and the raw materials themselves are not specified. Similarly, even when the same raw materials are used for synthesis, there are no particular restrictions on the synthesis method.

Additive B has a tertiary amine in the skeleton. Thus, a polyurethane or polyurea with a tertiary amine in the skeleton is a polyurethane or polyurea polymer whose starting materials are a diol containing a tertiary nitrogen-containing diol as a primary component and/or a diamine containing a tertiary nitrogen-containing diamine as a primary component, and a diisocyanate. Additive B preferably has an N,N-dialkyl semicarbazide end group. A compound that has a tertiary nitrogen in the main chain and an N,N-dialkylsemicarbazide at an end can exhibit high heat resistance during dyeing despite having a low concentration of N,N-dialkylsemicarbazide, and a polyurethane elastic fiber with higher strength and elasticity can be realized.

Specific examples of preferred tertiary nitrogen-containing diols that can be used include N-methyl-N,N-diethanolamine, N-methyl-N,N-dipropanolamine, N-methyl-N,N-diisopropanolamine, N-butyl-N,N-diethanolamine, N-t-butyl-N,N-diethanolamine, N-octadecane-N,N-diethanolamine, N-benzyl-N,N-diethanolamine, N-t-butyl-N,N-diisopropanolamine, and piperazine derivatives such as bishydroxyethyl piperazine and bishydroxyisopropyl piperazine. Especially preferred is N-t-butyl-N,N-diethanolamine or N-benzyl-N,N-diethanolamine.

Specific examples of preferred tertiary nitrogen-containing diamines that can be used include N-methyl-3,3'-iminobis (propylamine), N-butyl-aminobis-propylamine, N-methyl-aminobis-ethylamine, N-t-butyl-aminobis-propylamine, piperazin-N,N'-bis (3-aminopropyl), and piperazin-N,N'-bis (2-aminoethyl). Especially preferred is N-methyl-3,3'-iminobis (propylamine) or piperazine-N,N'-bis (3-aminopropyl).

Preferred examples of diisocyanates that can be used in additive B include aliphatic diisocyanates such as methylene-bis (4-cyclohexyl isocyanate), isophorone diisocyanate, lysine diisocyanate, and DDI derived from dimer acid. Methylene-bis (4-cyclohexyl isocyanate) or isophorone diisocyanate is especially preferred.

As mentioned above, an end group of additive B is preferably a semicarbazide group. Any method common in the art can be used to introduce a semicarbazide group to an end of additive B, but a preferred example is reacting a substituted hydrazine with a diisocyanate to form a semicarbazide end group. Preferred examples of substituted hydrazines include N,N-dimethylhydrazine, N,N-diethylhydrazine, N,N-dipropylhydrazine, N,N-diisopropylhydrazine, N,N-dibutylhydrazine, N,N-diisobutylhydrazine, N,N-dihydroxyethylhydrazine, and N,N-dihydroxyisopropylhydrazine. N,N-dimethylhydrazine and N,N-dihydroxyethylhydrazine are especially preferred.

Especially preferred examples of additive B include a polyurethane produced by a reaction of N-t-butyl-N,N-diethanolamine with methylene-bis (4-cyclohexylamine), a polyurethane produced by a reaction of N-t-butyl-N, N-diethanolamine and methylene-bis (4-cyclohexylisocyanate) with N,N-dimethylhydrazine at an end, and a polyurea produced by a reaction of N-methyl-3,3'-iminobis (propylamine) with methylene-bis (4-cyclohexylisocyanate). There are no particular restrictions on the ratio of N-t-butyl-N,N-diethanolamine to methylene-bis (4-cyclohexylisocyanate) as long as the effects of the present invention are not impaired. However, a polymer produced by a reaction at a ratio of 1: 1.00 to 1: 1.30 is preferred, and at a ratio of 1:1.02 to 1:1.20 is especially preferred.

In the present invention, the sulfonic acid amine salt derived from the tertiary amine in additive B is formed by ionic bonding of a sulfonic acid compound. A sulfonic acid compound in the present invention is a compound having a sulfonic acid group, and the H in the sulfonic acid group may be in a dissociated state, and the sulfonic acid compound may be a hydrate.

From the standpoint of stereoselectivity to the tertiary amine in the skeleton of additive B and optimization of steric hindrance with respect to the polyurethane molecular chain, the molecular weight of the sulfonic acid compound is preferably 96 or more and 300 or less, and more preferably 96 or more and 200 or less.

Examples of sulfonic acid compounds include aliphatic sulfonic acids such as methane sulfonic acid, ethane sulfonic acid, decane sulfonic acid, octadecane sulfonic acid, and cyclohexyl sulfonic acid, aromatic sulfonic acids such as benzene sulfonic acid, naphthalene sulfonic acid, p-toluene sulfonic acid, phenol sulfonic acid, monochlorobenzene sulfonic acid, an anthraquinone sulfonic acid, and unsaturated aliphatic sulfonic acid such as vinyl sulfonic acid, dodecene sulfonic acid, tetradecene sulfonic acid, and hexadecene sulfonic acid. Another example is a sulfobetaine having both a sulfonic acid serving as the anionic group and an ammonium salt serving as the cationic group in the molecule. These sulfonic acid compounds may have any substituent as long as the effect of the present invention is not impaired, and these may be used alone or in combinations of two or more. Especially preferred as sulfonic acids are aliphatic sulfonic acids and aromatic sulfonic acids.

In the present invention, from the standpoint of improving the polyurethane elastic fiber yield, additive B is preferably a polyurethane with a tertiary amine-containing diol and an organic diisocyanate as the primary starting materials, and more preferably a polyurethane with a tertiary amine-containing diol and an organic diisocyanate as the primary starting materials in which an end group in the polyurethane is an N,N'-dialkyl semicarbazide end group.

The amount of additive B in the polyurethane elastic fiber described above is preferably in the range of 0.1% or more by weight and 10% or less by weight. When the amount of additive B is 0.1% or more by weight, additive B is present in the polyurethane elastic fiber at a concentration high enough to stabilize the change in fiber properties over time. From the standpoint of realizing better recovery stress in the actual usage range, the amount of additive B in the polyurethane elastic fiber is preferably in the range of 2.0% or more by weight and 5.0% or less by weight. The additive B content of polyurethane elastic fibers can be identified and quantified using various analytical methods such as 1H-NMR, elemental analysis, ion chromatography, and GPC.

A polyurethane elastic fiber of the present invention may contain various additives such as stabilizers and pigments. Preferred examples of light stabilizers and antioxidants include hindered phenolic agents such as BHT and Sumilyzer (registered trademark) GA-80 from Sumitomo Chemical Co., Ltd., benzotriazole-based and benzophenone-based agents such as Tinuvin (registered trademark) from Ciba Geigy Co., Ltd., phosphorus-based agents such as Sumilyzer (registered trademark) P-16 from Sumitomo Chemical Co., Ltd., hindered amine agents, pigments such as iron oxide and titanium oxide, minerals such as hydrotalcite compounds, huntite, hydromagnesite, and tourmaline, inorganic materials such as zinc oxide, cerium oxide, magnesium oxide, calcium carbonate, and carbon black, fluorine-based or silicone-based resin powders, metal soaps such as magnesium stearate, disinfectants and deodorizers containing silver, zinc, or compounds of these, lubricants such as silicones and mineral oils, and antistatic agents such as cerium oxide, betaine, and phosphoric acid. These are preferably reacted with the polymers. In order to improve durability with respect to light and various types of nitrogen oxides, a nitrogen oxide supplement such as HN-150 from Nippon Hydrazine Co., Ltd., a thermal oxidation stabilizer such Sumilyzer (registered trademark) GA-80 from Sumitomo Chemical Co., Ltd., or a light stabilizer such as Sumisorb (registered trademark) 300 #622 from Sumitomo Chemical Co., Ltd. is preferably used. In order to improve dispersibility in the fiber to stabilize the spinning process when these stabilizers and pigments are used, an inorganic agent is preferably used which has been surface-treated with organic substances such as fatty acids, fatty acid esters, and polyol-based organic substances, silane-based coupling agents, titanate-based coupling agents, or mixtures thereof.

The method for producing a polyurethane elastic fiber of the present invention will now be explained in detail.

The present invention is a method for producing a polyurethane elastic fiber, the method comprising: spinning a spinning stock solution containing polyurethane A and additive B below.

Polyurethane A: A polyurethane using as starting materials a polymer diol, a diisocyanate, and a chain extender, and not having a tertiary amine in the skeleton.

Additive B: A polyurethane or polyurea using a diol and/or a diamine and a diisocyanate as starting materials, and having a tertiary amine nitrogen bonded only to a non-aromatic carbon in the skeleton, the tertiary amine nitrogen bonding ionically to a sulfonic acid compound to form a sulfonic acid amine.

There are no particular restrictions on the method used to obtain a spinning stock solution containing polyurethane A and additive B.

An example is a method for producing a polyurethane elastic fiber, wherein the method comprises: adding additive solution b and additive solution c to spinning stock solution a below to obtain a spinning stock solution; and spinning the spinning stock solution.

Spinning Stock Solution a: A spinning stock solution containing polyurethane A described above.

Additive Solution b: An additive solution containing a polyurethane or polyurea using as starting materials a diol and/or a diamine and a diisocyanate, and having a tertiary amine nitrogen bonded only to a non-aromatic carbon in the skeleton.

Additive Solution c: An additive solution containing a sulfonic acid compound having a molecular weight of 96 or more and 300 or less.

Another method entails preparing spinning stock solution a containing polyurethane A and additive solution d containing additive B separately, and mixing additive solution d with spinning stock solution a to obtain a polyurethane. At this time, additive solution d can be obtained by mixing additive solution b and additive solution c together to obtain additive B, which has a sulfonic acid amine salt structure in which a tertiary amine and a sulfonic acid are ionically bonded in the molecular structure.

Polyurethane A may be prepared using melt polymerization, solution polymerization, or some other method. However, the solution polymerization method is especially preferred. In the solution polymerization method, not many foreign substances such as gels are produced in the polyurethane, the spinning solution is easy to spin, and a polyurethane elastic fiber with a low degree of fineness is easy to obtain. Of course, the solution polymerization method is also advantageous in that a step of making a solution can be omitted.

A polyurethane A that is especially suitable for the present invention is synthesized using PTMG with a number average molecular weight of 1800 or more and 6000 or less as the polymer diol, MDI as the diisocyanate, and at least one type among ethylenediamine, 1,2-propanediamine, 1,3-propanediamine, and hexamethylenediamine as the chain extender.

Polyurethane A can be synthesized from the raw materials mentioned above in a solvent such as N,N-dimethylacetamide (DMAc), N,N-dimethylformamide (DMF), dimethyl sulfoxide (DMSO), N-methylpyrrolidinone (NMP), or one whose main components are these. Preferred methods include the so-called one-shot method, in which the raw materials are added to a solvent, dissolved, heated to an appropriate temperature, and reacted to form a polyurethane, and a method in which a polymer diol and a diisocyanate are melt-reacted, and the reaction product is dissolved in a solvent and reacted with a chain extender to obtain a polyurethane.

When a diol is used as a chain extender for polyurethane A, a polyurethane melting point on the high side in a range of 200°C or higher and 260°C or lower is preferred from the standpoint of excellent heat resistance. This is typically achieved by controlling the types and ratios of polymer diols, MDIs, and diols used. When the molecular weight of the polymer diol is low, a polyurethane with a high melting point can be obtained by increasing the relative ratio of MDI. Similarly, when the molecular weight of the diol is low, a polyurethane with a high melting point can be obtained by reducing the relative ratio of the polymer diol.

When the molecular weight of the polymer diol is 1800 or more, the polymerization is preferably conducted at a ratio of (moles of MDI)/(moles of polymer diol) $\geq$ 1.5 in order to raise the melting point on the high side to 200°C or more.

In synthesizing such a polymer A, one type or a mixture of two or more types of catalysts such as amine catalysts and organometallic catalysts is preferably used.

Examples of amine catalysts include N,N-dimethylcyclohexylamine, N,N-dimethylbenzylamine, triethylamine, N-methylmorpholine, N-ethylmorpholine, N,N,N',N'-tetramethylethylenediamine, N,N,N',N'-tetramethyl-1,3-propanediamine, N,N,N',N'-tetramethylhexanediamine, bis-2-dimethylaminoethyl ether, N,N,N',N',N''-pentamethyldiethylenetriamine, tetramethylguanidine, triethylenediamine, N,N'-dimethylpiperazine, N-methyl-N'-dimethylaminoethyl-piperazine, N-(2-dimethylaminoethyl) morpholine, 1-methylimidazole, 1,2-dimethylimidazole, N,N-dimethylaminoethanol, N,N,N'-trimethylaminoethylethanolamine, N-methyl-N'-(2-hydroxyethyl) piperazine, 2,4,6-tris (dimethylaminomethyl) phenol, N,N-dimethylaminohexanol, and triethanolamine.

Examples of organometallic catalysts include tin octanoate, dibutyl tin dilaurate, and lead dibutyl octanoate.

The concentration of polyurethane in the resulting spinning stock solution containing polyurethane A is preferably in the range of 30% or more by weight and 80% or less by weight.

Additive solution b is an additive solution containing a polyurethane or polyurea using as starting materials a diol and/or a diamine and a diisocyanate, and having in the molecular structure a tertiary amine nitrogen bonded only to a non-aromatic carbon in the skeleton. The concentration of polyurethane or polyurea in additive solution b is preferably in the range of 30% or more by mass and 80% or less by mass. The method used to prepare the polyurethane or polyurea in additive solution b can be the method used to prepare polyurethane A except for the different starting materials.

Additive solution c is an additive solution containing a sulfonic acid compound having a molecular weight of 96 or more and 300 or less. The sulfonic acid compound in additive solution c is described in detail above in the description of additive B. The concentration of sulfonic acid in additive solution c is preferably in the range of 10% or more by mass and 50% or less by mass.

Additive solution d is a mixture of additive solution b and additive solution c and contains additive B which has a sulfonic acid amine salt structure in which a tertiary amine and a sulfonic acid are ionically bonded in the molecular structure. In additive solution d, the concentration of additive B is preferably in the range of 30% or more by mass and 80% or less by mass.

In the polyurethane elastic fiber production method of the present invention, the polyurethane stock solution is preferably obtained by adding a solution of additive d containing additive B to spinning stock solution a containing urethane A. The solution of additive d containing additive B can be added to the polyurethane A solution using any method common in the art. Typical methods include using a static mixer, stirring, using a homomixer, and using a twinscrew extruder.

From the standpoint of controlling the viscosity of the polyurethane solution for spinning based on the appropriate spinning conditions, one or more end blockers is preferably used. Examples include monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine, and diamylamine, monools such as ethanol, propanol, butanol, isopropanol, allyl alcohol, and cyclopentanol, and monoisocyanates such as phenyl isocyanate.

A basic fiber of the present invention can be obtained using, for example, dry spinning, wet spinning, or melt spinning a spinning stock solution described above, and then winding the fiber. Dry spinning is especially preferred from the standpoint of stable spinning at all finenesses from thin to thick.

There are no particular restrictions on the fineness or cross-sectional profile of a polyurethane urea elastic fiber of the present invention. For example, the cross-sectional profile of the fibers may be circular or flat.

There are no particular restrictions on the dry spinning method, and spinning may be performed after selecting the appropriate spinning conditions for the desired characteristics and the spinning equipment.

For example, because the permanent strain rate and stress relaxation of a polyurethane urea elastic fiber of the present invention are particularly susceptible to the speed ratio between the godet roller and the winder, the spinning conditions are preferably determined based on the intended use for the fiber. From the standpoint of obtaining a polyurethane urea elastic fiber with the desired permanent strain rate and stress relaxation, take up is preferably conducted at a speed ratio between the godet roller and the winder in the range of 1.10 or more and 1.65 or less. Also, from the standpoint of improving the strength of the resulting polyurethane urea elastic fiber, the spinning speed is preferably 250 m/min or more.

[Examples]

The present invention will now be described in greater detail with reference to examples. However, the present invention is not limited to these examples.

< Evaluation Methods >

[1] Elastic Fiber Properties

In order to measure the basic characteristics and stability over time of the elastic fibers, a tensile test was carried out on a sample fiber using an Instron 4502 tensile tester under the following conditions.

First, a 5 cm (L1) sample was elongated by 300% five times at a tensile rate of 50 cm/min, and the stress after elongation by 300% the fifth time was defined as (G1). The sample length was then held at elongation of 300% for 30 seconds. The stress after holding the elongated fiber for 30 seconds was defined as (G2). Next, when the elongated sample was restored and the stress had reached 0, the length of the sample was defined as (L2). The sample was then elongated for a sixth time until it broke. The stress at break was defined as (G3), and the sample length at break was defined as (L3). Also, the strain and stress at the time of recovery after holding the elongated sample for 30 seconds for the fifth time was plotted and a curve was drawn. The stress under 200% strain was calculated as (P-200), and the strength in the actual usage range of the expansion and contraction characteristics at a predetermined fineness (22 dtex) was calculated as (G4).

The number of measurements was n = 3, and the average value was used to calculate the characteristics described above.

(1) Basic Properties of the Elastic Fiber

The basic characteristics of an elastic fiber are breaking strength, elongation at break, and permanent strain rate, and these were measured.

· Breaking strength (cN) = (G3)

· Recovery stress in actual usage range (cN) = (G4)

$$\text{Permanent strain rate (\%)} = 100 \times ((L2)-(L1)) / (L1)$$

(2) Elastic Fiber Stability Over Time

The change in strength over time in the actual usage range and the change in strain rate over time were measured as the stability of the elastic fiber over time. The day on which the test fiber was collected after spinning was set as day 0. After storage at a temperature of 21°C and a humidity of 60%, the physical characteristics of the test fiber were measured after one day and after three months, and the characteristics were calculated using the following equations.

· Change in strength over time in the actual usage range (%) = [(strength of the fiber in the actual usage range three months after spinning)/(strength of the fiber in the actual usage range one day after spinning)] $\times$ 100

· Change in strain rate over time (%) = [(permanent strain rate of the fiber three months after spinning)/(permanent strain rate of the fiber one day after spinning)] $\times$ 100

Here, a smaller difference in the physical property values of the polyurethane urea elastic fiber one day and three months after spinning indicates better stability over time. The change in strength over time in the actual usage range and the change in strain rate over time were evaluated using the following criteria: 90% or more and less than 120% means especially excellent stability over time (◎), 85% or more and less than 90% or 120% or more and less than 125% means excellent stability over time (○), and less than 85% or more than 125% means residual problems with stability over time (×).

[2] Spinnability of Elastic Fibers

Spinning was continuously performed for 48 hours, and the number of broken fibers after that time was used as an index for determining spinnability. After continuous spinning for 48 hours, less than two fiber breaks was considered excellent (◎). More than two fiber breaks over 48 hours but less than two fiber breaks over 24 hours was considered good (○).

[Example 1]

· Preparation of Spinning Stock Solution a

A DMAc solution (35% by mass) of a polyurethane polymer using as starting materials PTMG (molecular weight 1,800) as the polymer diol, MDI as the diisocyanate, ethylenediamine as the chain extender, and diethylamine as an end blocker was prepared in the usual manner, and this was designated as A1.

· Preparation of Additive Solution b

A DMAc solution (concentration 35% by mass) of a polyurethane (Metachlor (registered trademark) 2462 from DuPont) using starting materials t-butyldiethanolamine as the diol having tertiary amine nitrogen and methylene-bis-(4-cyclohexylisocyanate) as the diisocyanate was prepared, and this was designated as T1.

· Preparation of Additive Solution c

A DMAc solution (concentration 35% by mass) of p-toluenesulfonic acid monohydrate (PTSA below) as the sulfonic acid compound was prepared, and this was designated as S1.

· Preparation of Additive Solution d

T1 and S1 were mixed together thoroughly at a ratio of 90% by weight and 10% by weight, respectively, and mixed together for another hour at 30°C under a nitrogen atmosphere to obtain a DMAc solution (concentration 35% by mass) of a mixture of additive B, in which the tertiary amine moiety in T1 has become a sulfonic acid amine salt, and unreacted PTSA. This was subjected to repeated hexane extraction and toluene washing to remove the unreacted sulfonic acid compound and obtain additive B in the form of a solid. This solid was dissolved in DMAc to prepare a DMAc solution (concentration 35% by mass) of additive B, and this solution was designated as B1.

· Preparation of Additive Solution e

A DMAc solution (35% by mass) of a condensed polymer of p-cresol and divinylbenzene (Metachlor (registered trademark) 2390 from DuPont) was prepared as another additive, and this was designated as Z1.

· Preparation of Spinning Stock Solutions

A1, B1, and Z1 were uniformly mixed together at 98.9% by mass, 0.1% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 2]

A1, B1, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 3]

A1, B1, and Z1 were uniformly mixed together at 94% by mass, 5% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 4]

A1, B1, and Z1 were uniformly mixed together at 89% by mass, 10% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 5]

A1, B1, and Z1 were uniformly mixed together at 79% by mass, 20% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 6]

A DMAc solution (concentration 35% by mass) of 3-[[2-(methacryloyloxy)ethyl] dimethylammonio] propan-1-sulfonic acid was prepared as an alternative to S1 in the same manner as Example 1, and this was designated as S2. Also, a DMAc solution (concentration 35% by mass) of additive B, was prepared, which consists of T1 and S2, and this was designated as B2.

A1, B2, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 7]

A DMAc solution (concentration 35% by mass) of 2-hydroxy-4-methoxybenzophenone-5-sulfonic acid monohydrate was prepared as an alternative to S1 in the same manner as Example 1, and this was designated as S3. Also, a DMAc solution (concentration 35% by mass) of additive B, was prepared, which consists of T1 and S3, and this was designated as B3.

A1, B3, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Example 8]

As an alternative to T1 in Example 1, N,N-dimethylhydrazine was reacted at the end of the structure with an adduct having 6 to 8 repeating units of t-butyldiethanolamine and methylene-bis-(4-cyclohexylisocyanate) to obtain a polymer with dimethyl semicarbazide formed at the end, and this was used to prepare a DMAc solution (concentration 35% by mass), which was designated as T2.

A DMAc solution (concentration 35% by mass) of additive B, was prepared in the same manner as Example 1, which consists of T2 and S1, and this was designated as B4.

A1, B4, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber.

The composition of this polyurethane elastic fiber is shown in Table 1, and the properties of this fiber are shown in Table 2.

[Example 9]

A DMAc solution (concentration 35% by mass) of a polyurethane urethane polymer used as polyurethane A consisting of PTMG with a molecular weight of 2,100, MDI, ethylene glycol, and 1-butanol as an end blocker was prepared in the usual manner.

A2, B1, and Z1 were uniformly mixed together at 98.9% by mass, 0.1% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 10]

A2, B1, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 11]

A2, B1, and Z1 were uniformly mixed together at 94% by mass, 5% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 12]

A2, B1, and Z1 were uniformly mixed together at 89% by mass, 10% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 13]

A2, B2, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 14]

A2, B3, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Example 15]

A2, B4, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Comparative Example 1]

A1 and Z1 were uniformly mixed together at 99% by mass and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Comparative Example 2]

A1, T1, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Comparative Example 3]

A DMAc solution (concentration 35% by mass) of a sulfonic acid amine salt was prepared as D2 using Neogermi DFS (didecyldimethylammonium trifluoride methylsulfonate) from Sanyo Kasei Co., Ltd. as a sulfonic acid amine salt that does not have a polyurethane structure.

A1, D2, and Z1 were uniformly mixed together at 97% by mass, 2% by mass, and 1% by mass, respectively, to obtain a spinning stock solution, and this spinning stock solution was dry-spun and wound at a spinning speed of 520 m/min with the godet roller and winder speed ratio set at 1.4, to obtain 100 g of a spun 22 dtex multifilament polyurethane elastic fiber. The composition of this polyurethane elastic fiber is shown in Table 1, and the properties of this fiber are shown in Table 2.

[Comparative Example 4]

A2 and Z1 were uniformly mixed together at 99% by mass and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Comparative Example 5]

A2, T1, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

[Comparative Example 6]

A2, D2, and Z1 were uniformly mixed together at 97% by mass, 2% by mass, and 1% by mass, respectively, to obtain a spinning stock solution, and this spinning stock solution was dry-spun and wound at a spinning speed of 540 m/min with the godet roller and winder speed ratio set at 1.5, to obtain 50 g of a spun 20 dtex multifilament polyurethane elastic fiber. The composition of this polyurethane elastic fiber is shown in Table 1, and the properties of this fiber are shown in Table 2.

In Table 1 and Table 2, "polyurethane elastic fiber" is abbreviated as "elastic fiber."

[Table 1]

| | Polyurethane A | | Additive B | | | | | Polyurethane Other Than Polyurethane A, Additive B | | Sulfonic Acid Amine Salt w/o Polyurethane Structure | | Other Additives | |
|---|---|---|---|---|---|---|---|---|---|---|---|---|---|
| | Spinning Stock Solution a | Amount in Elastic Fiber (wt%) | Additive Solution d | Amount in Elastic Fiber (wt%) | Additive Solution b | Sulfonic Acid Compound — Additive Solution c | Sulfonic Acid Compound — MW | No. | Amount in Elastic Fiber (wt%) | No. | Amount in Elastic Fiber (wt%) | Additive Solution e | Amount in Elastic Fiber (wt%) |
| Ex. 1 | A1 | 98.9 | B1 | 0.1 | T1 | S1 | 190.2 | - | 0 | - | 0 | Z1 | 1 |
| Ex. 2 | A1 | 97 | B1 | 2 | T1 | S1 | 190.2 | - | 0 | - | 0 | Z1 | 1 |
| Ex. 3 | A1 | 94 | B1 | 5 | T1 | S1 | 190.2 | - | 0 | - | 0 | Z1 | 1 |
| Ex. 4 | A1 | 89 | B1 | 10 | T1 | S1 | 190.2 | - | 0 | - | 0 | Z1 | 1 |
| Ex. 5 | A1 | 79 | B1 | 20 | T1 | S1 | 190.2 | - | 0 | - | 0 | Z1 | 1 |
| Ex. 6 | A1 | 97 | B2 | 2 | T1 | S2 | 279.4 | - | 0 | - | 0 | Z1 | 1 |
| Ex. 7 | A1 | 97 | B3 | 2 | T1 | S3 | 326.3 | - | 0 | - | 0 | Z1 | 1 |
| Ex. 8 | A1 | 97 | B4 | 2 | T2 | S1 | 190.2 | - | 0 | - | 0 | Z1 | 1 |
| Ex. 9 | A2 | 98.9 | B1 | 0.1 | T1 | S1 | 190.2 | - | 0 | - | 0 | Z1 | 1 |
| Ex. 10 | A2 | 97 | B1 | 2 | T1 | S1 | 190.2 | - | 0 | - | 0 | Z1 | 1 |
| Ex. 11 | A2 | 94 | B1 | 5 | T1 | S1 | 190.2 | - | 0 | - | 0 | Z1 | 1 |
| Ex. 12 | A2 | 89 | B1 | 10 | T1 | S1 | 190.2 | - | 0 | - | 0 | Z1 | 1 |
| Ex. 13 | A2 | 97 | B2 | 2 | T1 | S2 | 279.4 | - | 0 | - | 0 | Z1 | 1 |
| Ex. 14 | A2 | 97 | B3 | 2 | T1 | S3 | 326.3 | - | 0 | - | 0 | Z1 | 1 |
| Ex. 15 | A2 | 97 | B4 | 2 | T2 | S1 | 190.2 | - | 0 | - | 0 | Z1 | 1 |
| C. Ex. 1 | A1 | 99 | - | 0 | - | - | - | - | 0 | - | 0 | Z1 | 1 |
| C. Ex. 2 | A1 | 97 | - | 0 | - | - | - | T1 | 2 | - | 0 | Z1 | 1 |
| C. Ex. 3 | A1 | 97 | - | 0 | - | - | - | - | 0 | D2 | 2 | Z1 | 1 |
| C. Ex. 4 | A2 | 99 | - | 0 | - | - | - | - | 0 | - | 0 | Z1 | 1 |
| C. Ex. 5 | A2 | 97 | - | 0 | - | - | - | T1 | 2 | - | 0 | Z1 | 1 |
| C. Ex. 6 | A2 | 97 | - | 0 | - | - | - | - | 0 | D2 | 2 | Z1 | 1 |

[Table 2]

| | Basic Properties of Elastic Fiber | | | Change in Stability of Elastic Fiber Over Time | | | | Spinnability of Elastic Fiber |
|---|---|---|---|---|---|---|---|---|
| | Breaking Strength [cN] | Recovery Stress in Actual Usage Range [cN] | Permanent Distortion [%] | Percentage Change in Actual Usage Range | | Percentage Change in Permanent Distortion | | |
| | | | | % | Evaluation | % | Evaluation | |
| Ex. 1 | 20 | 0.55 | 19 | 123% | ○ | 89% | ○ | ◎ |
| Ex. 2 | 20 | 0.61 | 17 | 109% | ◎ | 97% | ◎ | ◎ |
| Ex. 3 | 22 | 0.63 | 17 | 114% | ◎ | 91% | ◎ | ◎ |
| Ex. 4 | 24 | 0.59 | 18 | 114% | ◎ | 94% | ◎ | ◎ |
| Ex. 5 | 25 | 0.62 | 19 | 116% | ◎ | 88% | ○ | ◎ |
| Ex. 6 | 21 | 0.63 | 17 | 118% | ◎ | 92% | ◎ | ◎ |
| Ex. 7 | 21 | 0.57 | 19 | 121% | ○ | 91% | ◎ | ◎ |
| Ex. 8 | 23 | 0.60 | 18 | 114% | ◎ | 93% | ◎ | ◎ |
| Ex. 9 | 32 | 0.49 | 29 | 101% | ◎ | 92% | ◎ | ◎ |
| Ex. 10 | 33 | 0.51 | 28 | 103% | ◎ | 95% | ◎ | ◎ |
| Ex. 11 | 30 | 0.53 | 26 | 104% | ◎ | 101% | ◎ | ◎ |
| Ex. 12 | 31 | 0.50 | 28 | 105% | ◎ | 94% | ◎ | ◎ |
| Ex. 13 | 32 | 0.52 | 27 | 104% | ◎ | 97% | ◎ | ◎ |
| Ex. 14 | 30 | 0.51 | 30 | 102% | ◎ | 91% | ◎ | ◎ |
| Ex. 15 | 33 | 054 | 26 | 103% | ◎ | 96% | ◎ | ◎ |
| C. Ex. 1 | 14 | 0.43 | 21 | 138% | × | 75% | × | ○ |
| C. Ex. 2 | 13 | 0.40 | 22 | 134% | × | 74% | × | ○ |
| C. Ex. 3 | 12 | 0.39 | 25 | 128% | × | 81% | × | ○ |
| C. Ex. 4 | 33 | 0.45 | 34 | 104% | ◎ | 89% | ○ | ○ |
| C. Ex. 5 | 34 | 0.46 | 33 | 105% | ◎ | 87% | ○ | ○ |
| C. Ex. 6 | 30 | 0.38 | 27 | 115% | ◎ | 82% | × | ○ |

**Claims**

1. A polyurethane elastic fiber comprising polyurethane A and additive B below.

   Polyurethane A: A polyurethane using as starting materials a polymer diol, a diisocyanate, and a chain extender, and not having a tertiary amine in the skeleton.
   Additive B: A polyurethane or polyurea using as starting materials a diol and/or a diamine and a diisocyanate, and having a tertiary amine nitrogen bonded only to a non-aromatic carbon in the skeleton, the tertiary amine nitrogen bonding ionically to a sulfonic acid compound to form a sulfonic acid amine.

2. A polyurethane elastic fiber according to claim 1, wherein additive B is a polyurethane or polyurea in which the diol starting material comprises a tertiary amine-containing diol as a primary component.

3. A polyurethane elastic fiber according to claim 1 or 2, wherein additive B is a polyurethane or polyurea in which the diamine starting material comprises a tertiary amine-containing diamine as a primary component.

4. A polyurethane elastic fiber according to any one of claims 1 to 3, wherein the molecular weight of the sulfonic acid compound in additive B is 96 or more and 300 or less.

5. A polyurethane elastic fiber according to any one of claims 1 to 4, wherein the amount of additive B is 0.1% or more by weight and 10% or less by weight.

6. A polyurethane elastic fiber according to any one of claims 1 to 5, wherein an end group in additive B is an N,N-dialkyl semicarbazide.

7. A method for producing a polyurethane elastic fiber, the method comprising: spinning a spinning stock solution containing polyurethane A and additive B below.

Polyurethane A: A polyurethane using as starting materials a polymer diol, a diisocyanate, and a chain extender, and not having a tertiary amine in the skeleton.
Additive B: A polyurethane or polyurea using a diol and/or a diamine and a diisocyanate as starting materials, and having a tertiary amine nitrogen bonded only to a non-aromatic carbon in the skeleton, the tertiary amine nitrogen bonding ionically to a sulfonic acid compound to form a sulfonic acid amine.

8. A method for producing a polyurethane elastic fiber according to claim 7, the method comprising: adding additive solution b and additive solution c to spinning stock solution a below to obtain a spinning stock solution containing polyurethane A and additive B; and spinning the spinning stock solution.

Spinning Stock Solution a: A spinning stock solution containing polyurethane A described above.
Additive Solution b: An additive solution containing a polyurethane or polyurea using as starting materials a diol and/or a diamine and a diisocyanate, and having a tertiary amine nitrogen bonded only to a non-aromatic carbon in the skeleton.
Additive Solution c: An additive solution containing a sulfonic acid compound having a molecular weight of 96 or more and 300 or less.

9. A method for producing a polyurethane elastic fiber according to claim 7, the method comprising: mixing additive solution b and additive solution c together to obtain additive solution d containing additive B having a sulfonic acid amine salt structure in which a tertiary amine and a sulfonic acid are ionically bonded in the molecular structure; mixing spinning stock solution a and additive solution d together to obtain a spinning stock solution; and spinning the spinning stock solution.

**Patentansprüche**

1. Elastische Polyurethanfaser umfassend Polyurethan A und Zusatzstoff B wie folgt

Polyurethan A: ein Polyurethan, das als Ausgangsstoffe ein Polymerdiol, ein Diisocyanat und einen Kettenverlängerer verwendet und kein tertiäres Amin in dem Gerüst aufweist,
Zusatzstoff B: ein Polyurethan oder Polyharnstoff, das/der als Ausgangsstoffe ein Diol und/oder ein Diamin und ein Diisocyanat verwendet und einen tertiäres-Amin-Stickstoff nur an einen nichtaromatischen Kohlenstoff in dem Gerüst gebunden aufweist, wobei der tertiäres-Amin-Stickstoff ionisch an eine Sulfonsäureverbindung bindet, um ein Sulfonsäureamin zu bilden.

2. Elastische Polyurethanfaser nach Anspruch 1, wobei der Zusatzstoff B ein Polyurethan oder Polyharnstoff ist, wobei das Diol-Ausgangsmaterial ein tertiäres-Aminenthaltendes Diol als eine primäre Komponente umfasst.

3. Elastische Polyurethanfaser nach Anspruch 1 oder 2, wobei Zusatzstoff B ein Polyurethan oder Polyharnstoff ist, wobei das Diamin-Ausgangsmaterial ein tertiäres-Amin-enthaltendes Diamin als primäre Komponente umfasst.

**4.** Elastische Polyurethanfaser nach einem der Ansprüche 1 bis 3, wobei das Molekulargewicht der Sulfonsäureverbindung in Zusatzstoff B 96 oder mehr und 300 oder weniger beträgt.

**5.** Elastische Polyurethanfaser nach einem der Ansprüche 1 bis 4, wobei die Menge an Zusatzstoff B 0,1 Gew.-% oder mehr und 10 Gew.-% oder weniger beträgt.

**6.** Elastische Polyurethanfaser nach einem der Ansprüche 1 bis 5, wobei eine Endgruppe in Zusatzstoff B ein N,N-Dialkylsemicarbazid ist.

**7.** Verfahren zur Herstellung einer elastischen Polyurethanfaser, wobei das Verfahren umfasst: Spinnen einer Spinnlösung, die Polyurethan A und Zusatzstoff B enthält wie folgt

Polyurethan A: ein Polyurethan, das als Ausgangsstoffe ein Polymerdiol, ein Diisocyanat und einen Kettenverlängerer verwendet und kein tertiäres Amin in dem Gerüst aufweist,
Zusatzstoff B: ein Polyurethan oder Polyharnstoff, das/der als Ausgangsstoffe ein Diol und/oder ein Diamin und ein Diisocyanat verwendet und einen tertiäres-Amin-Stickstoff nur an einen nichtaromatischen Kohlenstoff in dem Gerüst gebunden aufweist, wobei der tertiäres-Amin-Stickstoff ionisch an eine Sulfonsäureverbindung bindet, um ein Sulfonsäureamin zu bilden.

**8.** Verfahren zur Herstellung einer elastischen Polyurethanfaser nach Anspruch 7, wobei das Verfahren umfasst: Zugeben von Zusatzstofflösung b und Zusatzstofflösung c zu der Spinnlösung a wie folgt, um eine Spinnlösung zu erhalten, die Polyurethan A und Zusatzstoff B enthält; und Verspinnen der Spinnlösung, Spinnlösung a: eine Spinnlösung enthaltend das vorstehend beschriebene Polyurethan A,

Zusatzstofflösung b: eine Zusatzstofflösung, enthaltend ein Polyurethan oder einen Polyharnstoff, das/der als Ausgangsstoffe ein Diol und/oder eine Diamins und ein Diisocyanat verwendet einen tertiäres-Amin-Stickstoff nur an einen nichtaromatischen Kohlenstoff in dem Gerüst gebunden aufweist,
Zusatzstofflösung c: eine Zusatzstofflösung, enthaltend eine Sulfonsäureverbindung mit einem Molekulargewicht von 96 oder mehr und 300 oder weniger.

**9.** Verfahren zur Herstellung einer elastischen Polyurethanfaser nach Anspruch 7, wobei das Verfahren umfasst: Zusammenmischen von Zusatzstofflösung b und Zusatzstofflösung c, um Zusatzstofflösung d zu erhalten, die Zusatzstoff B mit einer Sulfonsäureaminsalzstruktur enthält, in der ein tertiäres Amin und eine Sulfonsäure in der Molekülstruktur ionisch gebunden sind; Zusammenmischen von Spinnlösung a und Zusatzstofflösung d, um eine Spinnlösung zu erhalten; und Verspinnen der Spinnlösung.

**Revendications**

**1.** Fibre de polyuréthane élastique comprenant le polyuréthane A et l'additif B ci-dessous :

polyuréthane A : un polyuréthane utilisant en tant que matières de départ un diol de polymère, un diisocyanate et un allongeur de chaîne et n'ayant pas une amine tertiaire dans le squelette ;
additif B : un polyuréthane ou une polyurée utilisant en tant que matières de départ un diol et/ou une diamine et un diisocyanate et ayant un atome d'azote d'amine tertiaire lié uniquement à un atome de carbone non aromatique du squelette, l'atome d'azote d'amine tertiaire se liant ioniquement à un composé acide sulfonique pour former une amine d'acide sulfonique.

**2.** Fibre de polyuréthane élastique selon la revendication 1, dans laquelle l'additif B est un polyuréthane ou une polyurée dans lesquels la matière de départ diol comprend un diol contenant une amine tertiaire en tant que composant principal.

**3.** Fibre de polyuréthane élastique selon la revendication 1 ou 2, dans laquelle l'additif B est un polyuréthane ou une polyurée dans lesquels la matière de départ diamine comprend une diamine contenant une amine tertiaire en tant que composant principal.

**4.** Fibre de polyuréthane élastique selon l'une quelconque des revendications 1 à 3, dans laquelle la masse moléculaire du composé acide sulfonique dans l'additif B est supérieure ou égale à 96 et inférieure ou égale à 300.

**5.** Fibre de polyuréthane élastique selon l'une quelconque des revendications 1 à 4, dans laquelle la quantité d'additif B est supérieure ou égale à 0,1 % en poids et inférieure ou égale à 10 % en poids.

**6.** Fibre de polyuréthane élastique selon l'une quelconque des revendications 1 à 5, dans laquelle un groupe terminal dans l'additif B est un N,N-dialkylsemicarbazide.

**7.** Procédé de production d'une fibre de polyuréthane élastique, le procédé comprenant : le filage d'une solution mère à filer contenant le polyuréthane A et l'additif B ci-dessous :

polyuréthane A : un polyuréthane utilisant en tant que matières de départ un diol de polymère, un diisocyanate et un allongeur de chaîne et n'ayant pas une amine tertiaire dans le squelette ;
additif B : un polyuréthane ou une polyurée utilisant un diol et/ou une diamine et un diisocyanate en tant que matières de départ et ayant un atome d'azote d'amine tertiaire lié uniquement à un atome de carbone non aromatique du squelette, l'atome d'azote d'amine tertiaire se liant ioniquement à un composé acide sulfonique pour former une amine d'acide sulfonique.

**8.** Procédé de production d'une fibre de polyuréthane élastique selon la revendication 7, le procédé comprenant : l'ajout de la solution d'additif b et de la solution d'additif c à la solution mère à filer a ci-dessous pour obtenir une solution mère à filer contenant le polyuréthane A et l'additif B ; et le filage de la solution mère à filer :

solution mère à filer a : une solution mère à filer contenant le polyuréthane A décrit ci-dessus ;
solution d'additif b : une solution d'additif contenant un polyuréthane ou une polyurée utilisant en tant que matières de départ un diol et/ou une diamine et un diisocyanate et ayant un atome d'azote d'amine tertiaire lié uniquement à un atome de carbone non aromatique du squelette ;
solution d'additif c : une solution d'additif contenant un composé acide sulfonique ayant une masse moléculaire supérieure ou égale à 96 et inférieure ou égale à 300.

**9.** Procédé de production d'une fibre de polyuréthane élastique selon la revendication 7, le procédé comprenant : le mélange de la solution d'additif b et de la solution d'additif c l'une avec l'autre pour obtenir la solution d'additif d contenant l'additif B ayant une structure de sel d'amine d'acide sulfonique dans laquelle une amine tertiaire et un acide sulfonique sont liés ioniquement dans la structure moléculaire ; le mélange de la solution mère à filer a et de la solution d'additif d l'une avec l'autre pour obtenir une solution mère à filer ; et le filage de la solution mère à filer.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11081045 A
- JP 2003155624 A
- JP 2011144491 A
- WO 2006064085 A
- CN 110373742
- WO 2012040076 A
- JP 2615131 B
- JP 61026612 A
- JP H02289516 A